# FASCICULE DE BREVET EUROPEEN

(11) **EP 4 151 838 B1**
(45) Date de publication et mention de la délivrance du brevet: **07.08.2024**
(21) Numéro de dépôt: 22195787.1
(22) Date de dépôt: 15.09.2022
(51) Int. Cl.: B64D 27/40, F01D 25/24

(54) **ENSEMBLE DE MOTORISATION D´AÉRONEF COMPRENANT UN DISPOSITIF DE REPRISE D'EFFORTS DE POUSSÉE CONFIGURÉ POUR ÊTRE ATTACHÉ À UN AÉRONEF**
FLUGTRIEBWERKSAUFBAU MIT EINER VORRICHTUNG ZUR AUFNAHME VON SCHUBKRÄFTEN GEEIGNET ZUR AUFHÄNGUNG AN EINEM FLUGZEUG
AIRCRAFT ENGINE ASSEMBLY COMPRISING A THRUST LOAD-RECEIVING DEVICE CONFIGURED TO BE MOUNTED TO AN AIRCRAFT

(30) Priorité: 20.09.2021 FR 2109869
(43) Date de publication de la demande: 22.03.2023
(73) Titulaire: AIRBUS OPERATIONS (S.A.S.), 31060 Toulouse (FR)
(72) Inventeur: BERJOT, Michael, 31060 TOULOUSE (FR); ROBIGLIO, Thomas, 31060 TOULOUSE (FR); ARELLANES MENDOZA, Karla Mariana, 31060 TOULOUSE (FR)
(74) Mandataire: Jardel, Marc Henry Philippe

(56) Documents cités:
- JP-A- 2004 352 232
- US-B2- 10 597 144
- US-B2- 7 607 609

## Description

La présente demande se rapporte à un ensemble de motorisation d'aéronef comprenant un dispositif de reprise d'efforts de poussée générés par un moteur fixé sous un mât au moyen d'attaches moteur.

On connaît de la demande de brevet EP3792182, un ensemble de motorisation qui comprend à l'avant, en prenant comme référence le sens de déplacement de l'aéronef dans l'air, une attache moteur avant, à l'arrière, une attache moteur arrière, et entre les deux attaches moteur, un dispositif de reprise d'efforts de poussée du moteur.

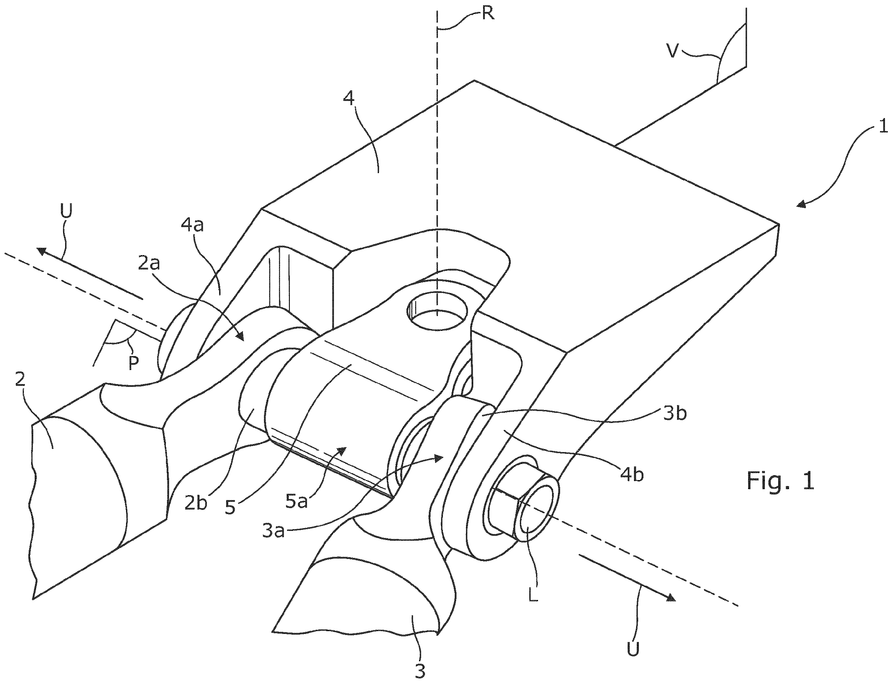

En référence avec la figure 1, le dispositif de reprise d'efforts de poussée 1 décrit dans la demande susmentionnée comprend deux bielles de reprise de poussée 2,3 (thrust link en anglais) disposées de part et d'autre d'un plan vertical médian V de l'ensemble de motorisation et qui ont chacune une extrémité avant attachée au moteur et une extrémité arrière 2a,3a articulée à une ferrure principale 4 par l'intermédiaire d'un palonnier 5. Le palonnier 5 est monté pivotant sur la ferrure principale 4 selon un axe de rotation R disposé dans le plan vertical médian V et orthogonal à un plan moyen de transmission des efforts de poussée P comprenant les axes longitudinaux des deux bielles 2,3. Le palonnier 5 est arrangé entre deux branches 4a,4b de la ferrure principale 4, symétriques l'une de l'autre par rapport au plan vertical médian V.

Les deux 2,3 bielles sont fixées au palonnier 5 par un unique axe de liaison L monté à l'horizontal, qui est disposé dans le plan moyen de transmission des efforts P et orthogonal à l'axe de rotation R. L'axe de liaison L est insérée dans un palier 5a du palonnier 5 et de chaque côté de ce dernier, au travers d'une bague rotulée montée à l'extrémité arrière 2a,3a de chaque bielle 2,3. L'axe de liaison L relie mécaniquement d'une part, sans jeu, les bielles au palonnier 5, et d'autre part, avec jeu, les bielles à la ferrure principale 4 par l'intermédiaire des deux branches 4a,4b de la ferrure principale 4.

Un tel dispositif de reprise d'efforts de poussée 1 est avantageux en ce que le montage des bielles 2,3 au moyen d'un axe de liaison L monté à l'horizontal permet d'optimiser la compacité ainsi que l'accès aux opérateurs par les côtés gauche et droit de l'ensemble de motorisation.

En revanche, la conception d'un tel dispositif de reprise d'efforts de poussée 1 engendre des efforts hors plan dirigés vers les côtés et l'extérieur du dispositif (efforts selon les flèches U sur la figure 1) à chaque interface d'une bielle 2,3 avec le palonnier 5, ce qui peut, à terme, provoquer une usure prématurée des bagues rotulées.

Par conséquent, il existe un besoin de modifier la conception du dispositif de reprise d'effort tel que décrit ci-dessus pour pallier à cet inconvénient, tout en conservant un montage des bielles pour un axe de liaison monté à l'horizontal.

La présente invention vise à répondre en tout ou partie à ce besoin. A cet effet, l'invention a pour objet un ensemble de motorisation tel que revendiqué dans la revendication 1. Le brevet US7607609 décrit le préambule de la revendication 1.

Les caractéristiques de l'invention mentionnées ci-dessus, ainsi que d'autres, apparaîtront plus clairement à la lecture de la description suivante d'un exemple de réalisation, ladite description étant faite en relation avec les figures jointes, parmi lesquels :
- la figure 1 est une vue en perspective d'un dispositif de reprise d'efforts de poussée selon l'art antérieur ;
- la figure 2 est une vue schématique selon une coupe longitudinale d'un ensemble de motorisation attaché à une aile d'un aéronef selon l'invention ;
- la figure 3 est une vue en perspective illustrant un dispositif de reprise d'efforts de poussée de l'ensemble de motorisation représenté à a figure 2, selon un mode de réalisation de l'invention ;
- la figure 4 est une vue éclatée et en perspective du dispositif de reprise d'efforts de poussée de la figure 3 ;
- la figure 5 est une vue de dessus du dispositif de reprise d'efforts de poussée de la figure 3 illustrant un chemin principal d'effort dans un cas de fonctionnement nominal du dispositif de reprise d'efforts de poussée ;
- la figure 6 est vue similaire à la figure 5 illustrant un chemin secondaire d'effort activé dans un premier cas de défaillance du dispositif de reprise d'efforts de poussée ;
- la figure 7 est vue similaire à la figure 5 illustrant un autre chemin secondaire d'effort activé dans un second cas de défaillance du dispositif de reprise d'efforts de poussée.

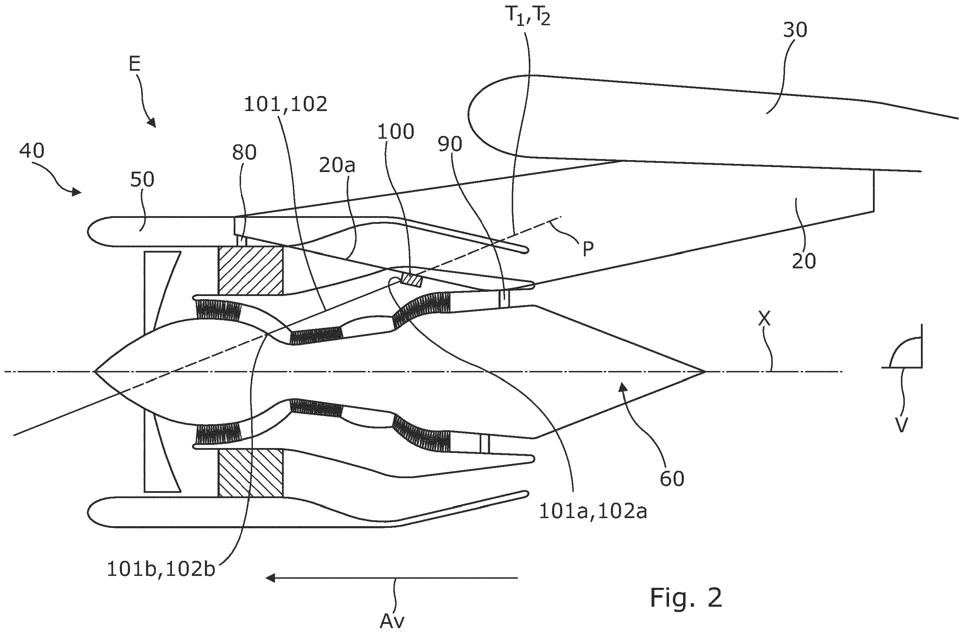

En relation avec la figure 2, un ensemble de motorisation E comporte un mât 20 fixé sous l'aile 30 d'un aéronef et une turbomachine 40 comportant une nacelle 50 qui entoure un moteur 60 suspendu au mât 20. Le moteur 60 s'étend d'avant en arrière selon un axe longitudinal X. Le mât 20 présente une face inférieure 20a plane et orientée vers le sol.

Dans la description, les termes relatifs à une position sont pris en référence par rapport à la flèche Av représentant la direction d'avancement de l'ensemble de motorisation-aile dans l'air sous l'effet de la poussée fournie par le moteur 60. On appelle plan vertical médian V, le plan passant par l'axe longitudinal X, orthogonal au sol (c'est-à-dire à l'horizontale) et qui divise l'ensemble de motorisation E en deux parties gauche et droite (on notera que dans l'exemple illustré sur les figures, les parties gauches et droites sont symétriques l'une de l'autre par rapport au plan vertical médian V).

La fixation du moteur 60 au mât 20 est assurée par un ensemble d'attaches moteur, fixées d'une part au mât 20 et d'une part au moteur 60. Ces attaches moteurs comprennent à l'avant, une attache moteur avant 80, à l'arrière, une attache moteur arrière 90, et entre les attaches moteur avant et arrière, un dispositif de reprise d' effort de poussée 100. Les attaches moteurs avant 80 et arrière 90 ne seront pas détaillées plus avant.

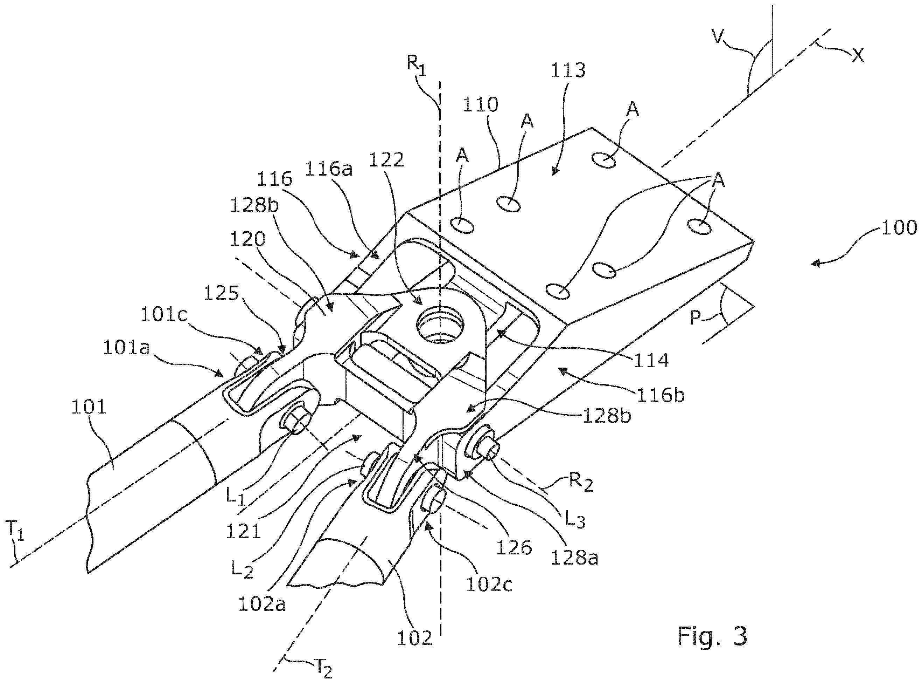

En référence avec les figures 3 à 5, le dispositif de reprise d'effort de poussée 100 comporte une ferrure principale 110 fixée à la face inférieure 20a du mât, un palonnier 120 articulé à la ferrure principale 110, et des bielles 101,102 de reprise des efforts de poussées du moteur disposées de part et d'autre du plan vertical médian V.

Chaque bielle 101,102 a une extrémité avant 101b, 102b articulée au moteur 60 et une extrémité arrière 101a,102a articulée au palonnier 120, et s'étend longitudinalement selon un axe T1,T2, dit axe de transmission d'efforts. Les deux axes de transmissions d'efforts T1, T2 sont inclinés par rapport à l'horizontale et se rapprochent l'un de l'autre dans une direction allant de l'avant vers l'arrière de l'ensemble de motorisation E (en d'autres termes, les axes T1, T2 sont convergents dans une direction allant de l'avant vers l'arrière de l'ensemble de motorisation E). Le plan contenant les deux axes de transmission d'efforts T1, T2 est appelé le plan moyen de transmission des efforts de poussée P.

Le palonnier 120 est monté en pivot sur la ferrure principale 110 avec un axe de rotation R1, dit axe principal, orthogonal au plan moyen de transmission des efforts de poussée P et compris dans le plan vertical médian V.

Le palonnier 120 comprend deux liaisons distinctes avec les bielles 101,102. La liaison entre une première, respectivement seconde bielle 101,102 et le palonnier 120 comprend un premier, respectivement second axe de liaison L1, L2 s'étendant parallèlement au plan moyen de transmission des efforts de poussée P et orthogonalement à l'axe de transmission d'effort T1, T2 de la première, respectivement seconde bielle 101, 102. Une telle liaison du palonnier 120 avec chacune des bielles 101,102 évite la génération d'efforts hors plan au niveau de chaque interface palonnier-bielle.

Dans le détail, la ferrure principale 110 comprend une semelle plane 113 plaquée contre la face inférieure 20a du mât. La fixation de la ferrure principale 110 au mât 20 s'effectue, par exemple, par l'utilisation de quatre vis de traction (non représentées) à travers d'alésages A traversant prévus à cet effet dans la semelle 113.

Une bride centrale 114 est arrangée à l'avant de la semelle 110 et s'étend vers l'avant, parallèlement au plan moyen de transmission des efforts de poussée P. Un alésage traversant 115 est pratiqué dans la bride centrale 114, et son axe d'alésage est compris dans le plan vertical médian V et perpendiculaire au plan moyen de transmission des efforts P.

Le palonnier 120 comprend sur une portion avant, une interface d'accrochage 121 des bielles pour la fixation des bielles 101,102, puis sur une portion arrière, une chape 122 pour la fixation du palonnier 120 à la ferrure principale 110. Le palonnier 120 présente un plan de symétrie vertical perpendiculaire au plan moyen de transmission des efforts P.

La chape 122 du palonnier 120 est formée par deux branches 122a-b parallèles entre elles. Chacune des deux branches 122a-b comprend un alésage traversant 123. Les axes d'alésages des alésages 123 des deux branches 122a-b sont coaxiaux et les deux alésages 123 sont de même dimensions.

La liaison pivot d'axe principal R1 entre le palonnier 120 et la ferrure principale 110 est formée par l'arrangement de la bride centrale 114 de la ferrure principale 110 entre les branches 122a-b de la chape 122 du palonnier et l'emmanchement d'un axe de liaison (non représenté) dans un palier 124 inséré avec un ajustement serré à la fois dans l'alésage 115 traversant de la bride centrale 114 mais également dans les alésages 123 des branches 122a-b. Lorsque la liaison pivot d'axe principal R1 est opérationnelle, les deux branches 122a-b du palonnier 120 s'étendent parallèlement au plan moyen de transmission des efforts P.

Selon l'invention, l'interface d'accrochage des bielles est formée par deux pattes d'accroche 125,126 planes s'étendant vers l'avant du palonnier 120. Les deux pattes d'accroche 125,126 sont espacées l'une de l'autre et symétriques par rapport au plan de symétrie vertical du palonnier.

Chaque patte d'accroche 125,126 est dédiée à une bielle 101,102, située du même côté du plan vertical médian V, et s'étend selon l'axe longitudinal T1, T2 de ladite bielle. Ainsi, une patte d'accroche 125 s'étend l'axe de transmission d'effort T1 et l'autre patte d'accroche 126 s'étend selon l'axe de transmission d'efforts T2.

De manière identique pour chaque patte d'accroche 125,126, un trou de passage 125a, 126a est arrangé sur la patte d'accroche. Une bague rotulée 125b,126b est insérée dans chaque trou de passage 125a, 126a. De manière identique pour chacune des bielles 101,102, la patte d'accroche 125,126 est insérée entre les deux branches parallèles d'une chape 101c,102c située à l'extrémité arrière 101a,102a de la bielle. Un axe de liaison L1, L2 emmanché sans jeu au travers de la chape 101c, 102c de la bielle et dans la bague rotulée 125b,126b lie le palonnier 120 et la bielle 101,102. Chaque axe de liaison L1, L2 s'étend ainsi parallèlement au plan moyen de transmission des efforts de poussée P et orthogonalement à l'axe de transmission d'effort T1, T2 associé à la bielle 101,102.

En outre, chaque axe de liaison L1, L2 d'une bielle 101, 102 avec le palonnier 120 est orthogonal à l'axe principal R1, et ainsi sensiblement parallèle à l'horizontale. L'installation de chaque bielle de poussée 101,102 par un axe de liaison L1, L2 monté à l'horizontal permet d'augmenter significativement l'accès aux liaisons entre le palonnier et les bielles contrairement à une installation par des axes montés à la verticale.

Avantageusement, le dispositif de reprise d'effort de poussée 100 comprend une interface de reprise d'effort secondaire entre la ferrure principale 110 et le palonnier 120. L'interface de reprise d'effort secondaire est activée en cas de rupture de l'interface de reprise d'effort principale, c'est-à-dire de la liaison pivot d'axe principal R1.

L'interface de reprise d'effort secondaire, située entre l'interface d'accrochage des bielles 121 et la liaison pivot d'axe principal R1, est formée par une liaison pivot d'axe de rotation R2, dit axe secondaire, compris dans le plan moyen de transmission des efforts P et orthogonal à l'axe principal R1. L'axe secondaire R2 est ainsi sensiblement parallèle à l'horizontale.

Pour réaliser l'interface de reprise d'effort secondaire, la ferrure principale 110 comprend une chape 116 formée par deux branches 116a-b reparties de part et d'autre de la bride centrale 114 et symétriques l'une de l'autre par rapport au plan vertical médian V. Chacune des deux branches 116a-b s'étend selon un plan parallèle au plan vertical médian V. Chaque branche 116a-b comprend un orifice 117 de forme circulaire et les orifices des deux branches 116a-b sont identiques et coaxiaux.

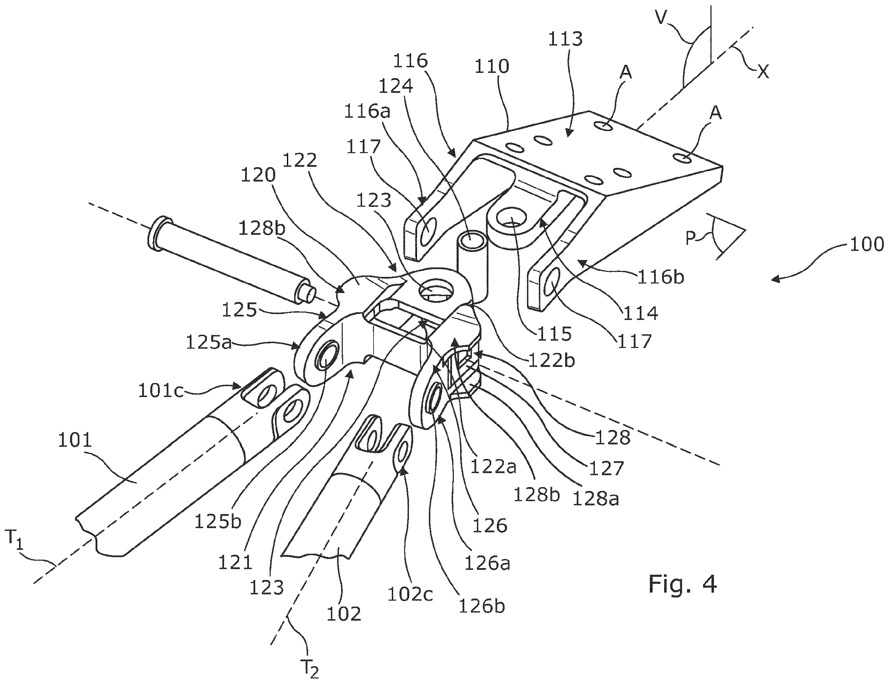

Un axe de liaison L3, dit en attente, est monté avec jeu sur la chape 116 de la ferrure centrale 110 par insertion dans chacun des deux orifices 117 et inséré, avec ajustement serré, au travers du palonnier 120. Dans le détail, l'axe de liaison en attente L3 est inséré au travers de deux orifices coaxiaux 127 du palonnier 120, où chaque orifice 127 est arrangé sur un flanc 128 (un seul visible sur la figure 4) du palonnier 120. Les deux orifices 127 sont ainsi arrangés sur deux flancs opposés du palonnier 120 et ces deux flancs 128 sont arrangés entre les deux branches 116a-b de la ferrure centrale 110. Il y a ainsi un flanc 128 en regard de chacune des branches 116a-b.

Dans le mode de réalisation de l'invention représenté aux figures 3 et 4, les deux flancs opposés 128 s'étendent parallèlement l'un de l'autre et chaque flanc 128 se prolonge, à l'avant du palonnier 120, par une patte d'accroche 125,126 de l'interface d'accrochage des bielles 121.

Au niveau de chacun des flancs 128, chaque orifice 127 est flanqué de deux bords saillants 128a-b, s'étendant selon des plans parallèles, vers l'extérieur du palonnier 120 et perpendiculairement au plan de symétrie vertical du palonnier.

De chaque côté du palonnier 120, la branche de chape 116a-b de la ferrure principale 110 est reçue entre les deux bords saillants 128a-b, mais n'est pas en contact avec ces derniers tant que l'interface de reprise d'effort principale est opérationnelle. Un jeu fonctionnel est prévu de sorte que, lorsque l'interface de reprise d'effort principale est opérationnelle, la plus petite distance entre une branche 116a-b et un bord saillant 128a-b est de l'ordre de quelques millimètres (exemple : 2 à 3 mm), et également, la plus petite distance entre une branche 116a-b et le flanc 128 du palonnier est aussi de l'ordre de quelques millimètres (exemple : 2 à 3 mm).

Les bords saillants 128a-b font offices de butée pour limiter le mouvement de rotation du palonnier 120 par rapport à la ferrure principale 110 lorsque l'interface de reprise d'effort secondaire est activée comme cela sera expliqué ci-dessous.

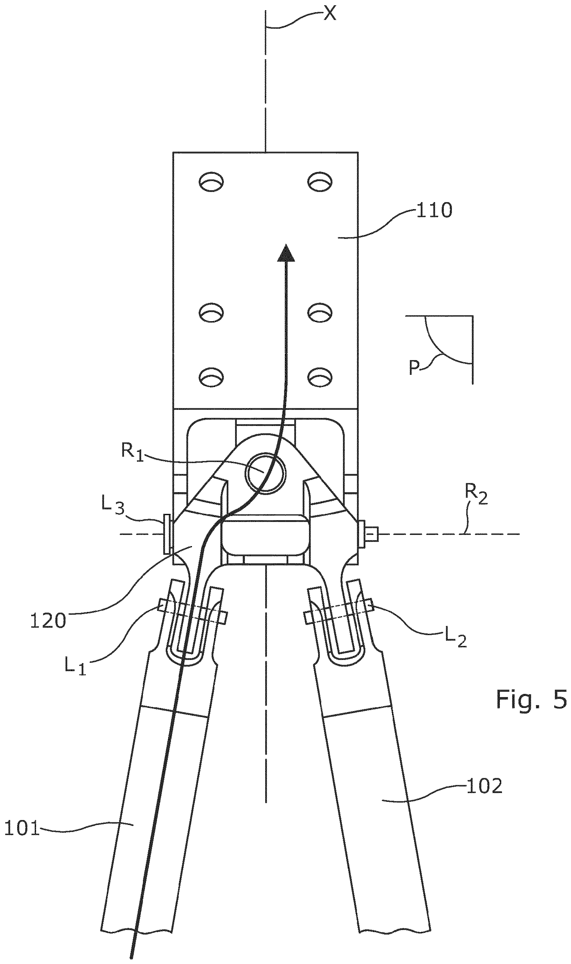

En cas de fonctionnement nominal du dispositif de reprise d'efforts de poussée (figure 5), le palonnier 120 peut pivoter dans le plan moyen de transmission des efforts P pour reprendre les efforts du moteur 60 transmis par les bielles 101,102. L'amplitude angulaire de la rotation est limitée, de chaque côté du plan vertical médian V, par la branche 116a-b de la ferrure.

Dans ce cas le chemin d'effort, dit chemin principal d'effort, passe successivement de chaque bielle 101, 102, au palonnier 120, puis à la ferrure principale 110 et enfin au mât 20. Le passage d'effort entre le palonnier 120 et la ferrure principale 110 s'effectue à travers la liaison pivot ajustée d'axe principal R1. Sur la figure 5, la ligne fléchée montre le chemin principal d'effort pour une bielle 101. Le chemin principal d'effort pour l'autre bielle 102 en serait le symétrique.

En cas de rupture de l'interface de reprise d'effort principale, le palonnier 120 va se déplacer sous le poids du moteur 60 suivant le plan moyen de transmission des efforts P jusqu'à un effacement du jeu entre l'axe de liaison en attente L3 et les branches 116a-b de la ferrure principale 110. Après effacement du jeu, le palonnier 120 se trouve bloqué en rotation selon l'axe principal R1 et libre en rotation selon l'axe secondaire R2 avec une amplitude de rotation de limitée par les bords saillants 128a-b des flancs 128. L'amplitude des oscillations du palonnier 120 autour de l'axe secondaire R2 est donc limitée afin de ne pas endommager les pièces.

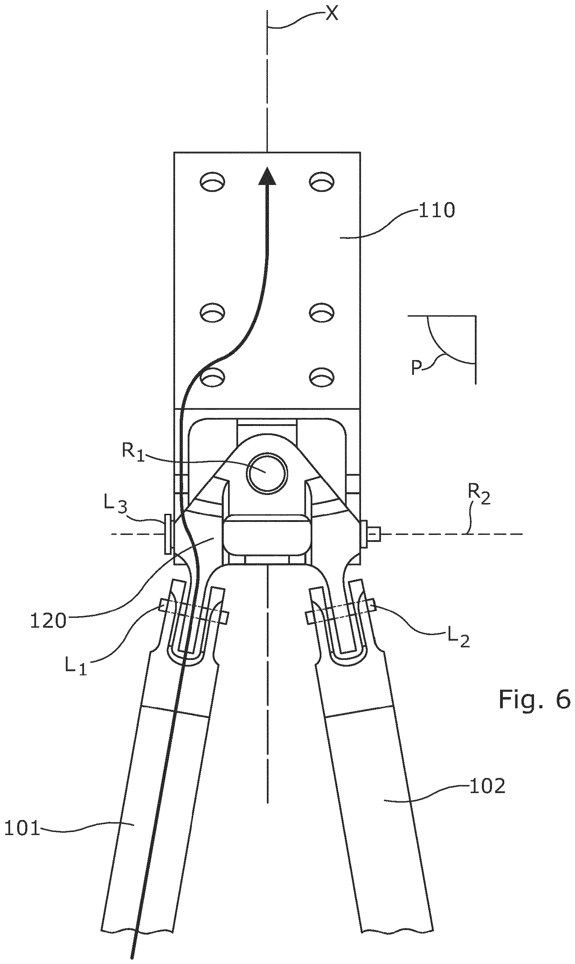

Dans ce cas, le chemin d'effort, dit secondaire, passe successivement de chaque bielle 101,102, au palonnier 110, à la ferrure principale 110 et enfin au mât 20. Le passage d'effort entre le palonnier 120 et la ferrure principale 110 s'effectue à travers l'axe de liaison en attente L3. Sur la figure 6, la ligne fléchée montre le chemin principal secondaire pour une bielle 101 et dans le cas d'une rupture de l'interface de reprise d'effort principale. Le chemin principal d'effort pour l'autre bielle 102 en serait le symétrique.

Grâce à la conception du système d'axes de liaison, les bielles 101,102 sont toujours bloquées en translation par rapport au palonnier 120 puisque, en cas de rupture de l'interface de reprise d'effort principale, l'axe de liaison en attente L3 est sollicité.

En cas de rupture d'une interface bielle-palonnier (c'est-à-dire rupture d'une patte d'accroche 125,126 ou d'un axe de liaison L1, L2 entre une bielle 101,102 et une patte d'accroche 125,126 d'un côté du plan vertical médian V, le palonnier 120 n'est plus équilibré ce qui va provoquer sa rotation autour de l'axe principal R1. Du côté du plan vertical médian V où l'interface bielle-palonnier est intègre, le palonnier 120 va se déplacer vers l'avant suivant le plan moyen de transmission des efforts P jusqu'à un effacement du jeu entre l'axe de liaison en attente L3 et la branche de la ferrure centrale 110.

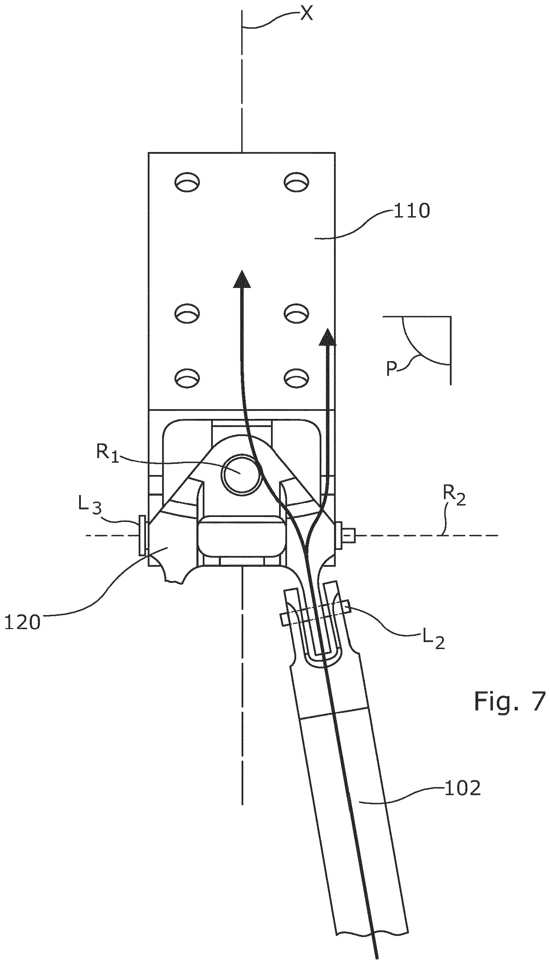

Dans ce cas, tous les efforts du moteur 60 transitent uniquement du côté du plan vertical médian V où l'interface bielle-palonnier est intègre. Sur la figure 7, la ligne fléchée montre le chemin d'effort qui passe successivement de la bielle 102 au palonnier 120 au travers de l'interface bielle-palonnier intègre, à la ferrure principale 110 puis enfin au mât 20. Le passage d'effort entre bielle vers la ferrure principale 110 s'effectue au travers de la liaison pivot d'axe principal R1 ainsi que de la liaison pivot d'axe secondaire R2.

Bien que l'invention a été décrite dans le cas où l'attache moteur arrière 90 et le dispositif de reprise d'efforts de poussée 100 sont distincts et séparés l'un de l'autre, une autre configuration est possible, sans sortir du cadre de la présente invention, dans laquelle la ferrure principale 110 du dispositif de reprise d'efforts de poussée 100 est solidaire (exemple : une même pièce remplie la fonction d'attache moteur arrière et de dispositif de reprise d'efforts de poussée) de l'attache moteur arrière 90.

## Revendications

1. Ensemble de motorisation (E) comprenant un moteur d'aéronef (60) suspendu sous un mât (20) de l'aéronef au moyen d'attaches moteur comprenant à l'avant, une attache moteur avant (80), à l'arrière, une attache moteur arrière (90), et entre les deux attaches moteur, un dispositif de reprise d'efforts de poussée (100), un plan vertical médian (V) passant par un axe longitudinal (X) du moteur (60) séparant l'ensemble de motorisation (E) en deux parties gauche-droite, le dispositif de reprise d'efforts de poussée (100) comprenant une ferrure principale (110) fixée sous le mât et deux bielles (101,102) disposées de part et d'autre du plan vertical médian (V) et ayant chacune une extrémité avant (101b,102b) articulée au moteur (60) et une extrémité arrière (101a,102a) articulée à la ferrure principale (110) par l'intermédiaire d'un palonnier (120) monté pivotant sur la ferrure principale (110) selon un axe de rotation (R1) étant, d'une part, orthogonal à un plan moyen de transmission des efforts de poussée (P) parallèle à l'axe longitudinal (T1, T2) de chacune des deux bielles et, d'autre part, disposé dans le plan vertical médian (V), les axes longitudinaux (T1, T2) des deux bielles (101, 102) étant convergents dans une direction allant de l'avant vers l'arrière de l'ensemble de motorisation (E), une première bielle (101) étant articulée au palonnier (120) au moyen d'un premier axe de liaison (L1) s'étendant parallèlement au plan moyen de transmission des efforts de poussée (P) et perpendiculairement à l'axe longitudinal de la première bielle (T1) et une seconde bielle (102) étant articulée au palonnier (120) au moyen d'un second axe de liaison (L2) s'étendant parallèlement au plan moyen de transmission des efforts de poussée (P) et perpendiculairement à l'axe longitudinal de la seconde bielle (T2), **caractérisé en ce que** le palonnier (120) comprend deux pattes d'accrochages (125,126) pour l'accrochage des bielles au palonnier (120), avec une première patte d'accrochage (125) associée à la première bielle (101) et une seconde patte d'accrochage (126) associée à la seconde bielle (102), où chaque patte d'accrochage (125,126) associée à une bielle (101,102) s'étend parallèlement à l'axe longitudinal (T1, T2) de ladite bielle (101, 102).

2. Ensemble de motorisation (E) selon la revendication 1, **caractérisé en ce que** le dispositif de reprise d'efforts de poussée (100) et l'attache moteur arrière (90) sont distincts.

## Patentansprüche

1. Triebwerkseinheit (E), umfassend ein Luftfahrzeugtriebwerk (60), das unter einem Mast (20) des Luftfahrzeugs mit Hilfe von Triebwerksbefestigungen aufgehängt ist, die vorn eine vordere Triebwerksbefestigung (80), hinten eine hintere Triebwerksbefestigung (90) und zwischen den beiden Triebwerksbefestigungen eine Schubkräfteaufnahmevorrichtung (100) umfassen, wobei eine vertikale Mittelebene (V) durch eine Längsachse (X) des Triebwerks (60) verläuft, die die Triebwerkseinheit (E) in zwei Teile links-rechts unterteilt, wobei die Schubkräfteaufnahmevorrichtung (100) Folgendes umfasst: einen unter dem Mast befestigten Hauptbeschlag (110) und zwei Stangen (101, 102), die auf beiden Seiten der vertikalen Mittelebene (V) angeordnet sind und jeweils ein vorderes Ende (101b, 102b), das am Triebwerk (60) angelenkt ist, und ein hinteres Ende (101a, 102a), das am Hauptbeschlag (110) über eine Traverse (120) angelenkt ist, die am Hauptbeschlag (110) um eine Drehachse (R1) schwenkbar montiert ist, die einerseits senkrecht zu einer zur Längsachse (T1, T2) jeder der beiden Stangen verlaufenden mittleren Schubkraftübertragungsebene (P) verläuft und andererseits in der vertikalen Mittelebene (V) angeordnet ist, wobei die Längsachsen (T1, T2) der beiden Stangen (101, 102) in einer Richtung konvergieren, die vom vorderen zum hinteren Teil der Triebwerkseinheit (E) verläuft, wobei eine erste Stange (101) an der Traverse (120) mit Hilfe einer ersten Verbindungsachse (L1) angelenkt ist, die sich parallel zur mittleren Schubkraftübertragungsebene (P) und senkrecht zur Längsachse der ersten Stange (T1) erstreckt, und wobei eine zweite Stange (102) an der Traverse (120) mit Hilfe einer zweiten Verbindungsachse (L2) angelenkt ist, die sich parallel zur mittleren Schubkraftübertragungsebene (P) und senkrecht zur Längsachse der zweiten Stange (T2) erstreckt, **dadurch gekennzeichnet, dass** die Traverse (120) zwei Befestigungslaschen (125, 126) zur Befestigung der Stangen an der Traverse (120) umfasst, wobei eine erste Befestigungslasche (125) mit der ersten Stange (101) verbunden ist und eine zweite Befestigungslasche (126) mit der zweiten Stange (102) verbunden ist, wobei sich jede mit einer Stange (101, 102) verbundene Befestigungslasche (125, 126) parallel zur Längsachse (T1, T2) der Stange (101, 102) erstreckt.

2. Triebwerkseinheit (E) nach Anspruch 1, **dadurch gekennzeichnet, dass** die Schubkräfteaufnahmevorrichtung (100) und die hintere Triebwerksbefestigung (90) getrennt sind.

## Claims

1. Propulsion assembly (E) comprising an aircraft engine (60) suspended below a pylon (20) of the aircraft by means of engine attachments comprising, at the front, a front engine attachment (80), at the rear, a rear engine attachment (90), and between the two engine attachments, a thrust force uptake device (100), a vertical median plane (V) passing through a longitudinal axis (X) of the engine (60) separating the propulsion assembly (E) into two parts, left and right, the thrust force uptake device (100) comprising a main fitting (110) fixed below the pylon and two links (101, 102), which are arranged on either side of the vertical median plane (V) and each have a front end (101b, 102b) articulated to the engine (60) and a rear end (101a, 102a) articulated to the main fitting (110) by way of a spreader (120) mounted so as to pivot on the main fitting (110) about an axis of rotation (R1) that, on the one hand, is orthogonal to a mean plane (P) for transmission of the thrust forces parallel to the longitudinal axis (T1, T2) of each of the two links and, on the other hand, is arranged in the vertical median plane (V), the longitudinal axes (T1, T2) of the two links (101, 102) being convergent in a direction from the front to the rear of the propulsion assembly (E), a first link (101) being articulated to the spreader (120) by means of a first connecting pin (L1) extending parallel to the mean plane (P) for transmission of the thrust forces and perpendicular to the longitudinal axis (T1) of the first link, and a second link (102) being articulated to the spreader (120) by means of a second connecting pin (L2) extending parallel to the mean plane (P) for transmission of the thrust forces and perpendicular to the longitudinal axis (T2) of the second link, **characterized in that** the spreader (120) comprises two fastening tabs (125, 126) for fastening the links to the spreader (120), with a first fastening tab (125) associated with the first link (101) and a second fastening tab (126) associated with the second link (102), wherein each fastening tab (125, 126) associated with a link (101, 102) extends parallel to the longitudinal axis (T1, T2) of said link (101, 102).

2. Propulsion assembly (E) according to Claim 1, **characterized in that** the thrust force uptake device (100) and the rear engine attachment (90) are separate.
